# EUROPÄISCHE PATENTSCHRIFT

(11) **EP 1 772 870 B1**
(45) Veröffentlichungstag und Bekanntmachung des Hinweises auf die Patenterteilung: **01.07.2009**
(21) Anmeldenummer: 06018331.6
(22) Anmeldetag: 01.09.2006
(51) Int. Cl.: G11B 33/12, H05K 7/16

(54) **Anordnung zur Festlegung einer Einschubkomponente**
System for fixing an insertable component
Dispositif destiné à la fixation d'un composant insérable

(30) Priorität: 05.10.2005 DE 102005047774
(43) Veröffentlichungstag der Anmeldung: 11.04.2007
(73) Patentinhaber: Fujitsu Siemens Computers GmbH, 80807 München (DE)
(72) Erfinder: Kannler, Bernhard, 86199 Augsburg (DE); Schmid, Michael, 89407 Dillingen (DE)
(74) Vertreter: Epping - Hermann - Fischer

(56) Entgegenhaltungen:
- EP-A- 0 392 620
- EP-A- 0 856 844
- US-A- 6 045 385

## Beschreibung

Die Erfindung betrifft eine Anordnung zur Festlegung einer Einschubkomponente in einem Gehäusekäfig, aufweisend einen Gehäusekäfig zur Aufnahme wenigstens einer Einschubkomponente mit seitlichen Befestigungsöffnungen, wenigstens ein Führungselement im Bereich einer ersten Wand des Gehäusekäfigs, durch das die Einschubkomponente in Einschubrichtung geführt wird, und wenigstens ein Halteelement im Bereich einer zweiten Wand des Gehäusekäfigs, durch das die Einschubkomponente festgelegt wird, wobei das Halteelement klapp- oder schwenkbar an der zweiten Wand befestigt ist, in einem geschlossenen Zustand verrastbar ist, und eine elastische Halteklammer aufweist, wobei die Halteklammer so mit der zweiten Wand des Gehäusekäfigs verrastbar ist, dass sie eine Kraft in Richtung der Einschubkomponente ausübt.

Eine derartige Anordnung ist aus der US 6,045,385 bekannt. In der bekannten Anordnung wird ein Modul oder eine Steckkarte zwischen zwei Führungsschienen festgelegt und durch einen schwenkbaren Verriegelungsmechanismus festgehalten.

Weitere Anordnungen zur Festlegung einer Einschubkomponente in einem Gehäusekäfig mit einem Führungselement und einem Halteelement sind vielfach bekannt. Beispielsweise weisen viele Laufwerkskäfige von Computergehäusen Führungsschienen zum Führen von eingeschobenen Laufwerken auf, wobei die Laufwerke nachfolgend durch seitlich eingeführte Schrauben als Haltelementen mit dem Gehäusekäfig verbunden werden. Eine solche Befestigungsmethode ist in der industriellen Fertigung vergleichsweise teuer, da die Befestigung mittels Schrauben nur schwer automatisiert werden kann. Des Weiteren besteht die Gefahr, dass Schrauben in das Gehäuseinnere fallen und dort Kurzschlüsse verursachen.

Andere Anordnungen zur Festlegung von Einschubkomponenten sehen daher seitlich ansteckbare Halteschienen vor. Beispielsweise ist aus der DE 102 44 887 B3 eine Anordnung aus einer Einschubkomponente mit seitlich ansteckbaren Halteschienen bekannt, die zwischen Führungselementen eines Laufwerkskäfigs gehalten werden. Nachteilig an dieser und ähnlichen Anordnungen ist es jedoch, dass das Laufwerk mit seitlich angesteckten Halteschienen nur nach Abnahme einer vorderen Gehäuseverkleidung in den Laufwerkskäfig eingeschoben werden kann. Zudem erfolgt die Laufwerksmontage hier in zwei Schritten, nämlich einem ersten Schritt, in dem die Halteschienen an dem Laufwerk oder der Einschubkomponente montiert werden, und einem zweiten Schritt, in dem die Einschubkomponenten mit angebrachten Halteschienen in dem Gehäusekäfig montiert werden.

Aufgabe der vorliegenden Erfindung ist es daher, eine Anordnung zur Festlegung einer Einschubkomponente in einem Gehäusekäfig zu beschreiben, die eine besonders einfache und sichere Montage von Einschubkomponenten gestattet.

Die Aufgabe wird erfindungsgemäß durch eine Anordnung der eingangs genannten Art gelöst, die dadurch gekennzeichnet ist, dass das Halteelement Befestigungszapfen aufweist, die im geschlossenen Zustand in die Befestigungsöffnung der Einschubkomponente eingreifen, sodass die Einschubkomponente festgelegt ist, und in einem geöffneten Zustand die Befestigungsöffnungen freigeben, sodass die Einschubkomponente in Einschubrichtung bewegt werden kann, und das Halteelement eine Halteschiene aufweist, wobei die Halteschiene die Kraft über die Befestigungszapfen auf die Befestigungsöffnungen oder die Einschubkomponente überträgt.

Erfindungsgemäß müssen keine Zusatzteile an der Einschubkomponente befestigt werden, die in den Gehäusekäfig aufgenommen werden soll. Stattdessen wird das Halteelement erst nach Einführen der Einschubkomponente in den Gehäusekäfig seitlich so geklappt oder geschwenkt, dass Befestigungszapfen des Halteelementes in die Befestigungsöffnungen der Einschubkomponente eingreifen und die Einschubkomponente in dem Gehäusekäfig festgelegt ist.

Auch auf Seiten des Gehäusekäfigs sind somit keine losen Einbauteile, wie beispielsweise Schrauben, nötig, die vor, während oder nach einem Einbau verloren gehen und dann beispielsweise zu Kurzschlüssen in dem Gehäuse führen könnten.

Dabei weist das Halteelement eine elastische Halteklammer und eine Halteschiene auf. Die elastische Halteklammer übt eine Kraft in Richtung der Einschubkomponente auf, sodass gleichzeitig mit der Festlegung ein Toleranzausgleich erreicht wird. Somit wird ein fester Sitz der montierten Einschubkomponente gewährleistet, was einen sicheren Betrieb, eine gute elektrische Masseverbindung und eine geräuscharme Befestigung sicherstellt.

Gemäß weiteren Ausgestaltungen der vorliegenden Erfindung weist die zweite Wand des Gehäusekäfigs erste bzw. zweite Rastelemente zum Verrasten des Halteelementes in dem geöffneten oder geschlossenen Zustand auf. Die Rastelemente in Form von Nasen, Lappen oder Kerben können auf einfache Weise in die Gehäusewand des Gehäusekäfigs eingestanzt werden und erlauben eine sichere Arretierung des Halteelementes in dem geöffneten bzw. geschlossenen Zustand.

In einer weiteren vorteilhaften Ausgestaltung der Erfindung weisen die Befestigungsöffnungen der Einschubkomponente Gewinde auf, sodass die Einschubkomponente alternativ auch mit Schrauben an der Gehäusewand befestigt werden kann.

Weitere Einzelheiten und Ausgestaltungen der Erfindung sind in den Unteransprüchen angegeben.

Die Erfindung wird nachfolgend an einem Ausführungsbeispiel anhand der Zeichnung näher erläutert.

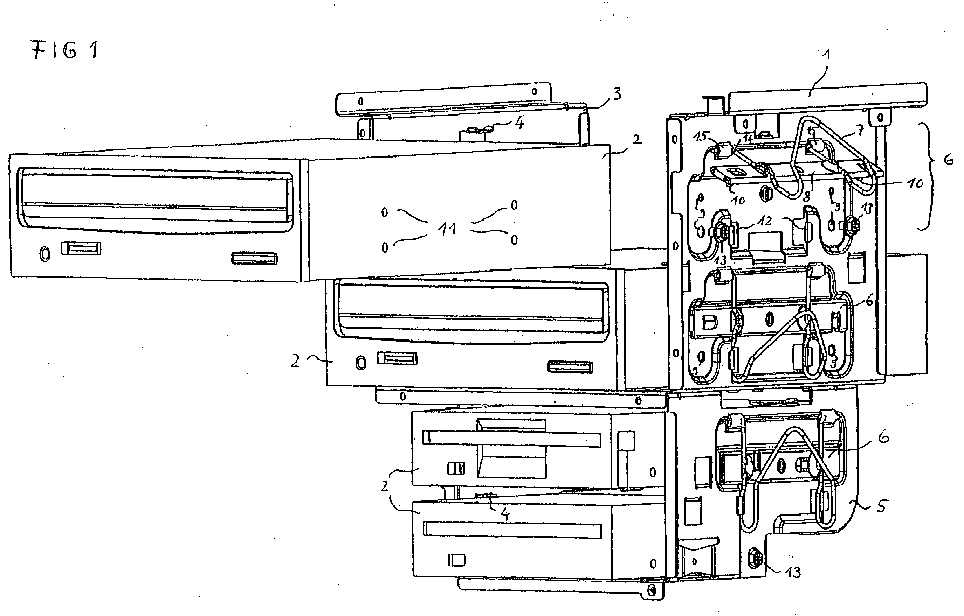

Die Figur 1 zeigt eine Anordnung zur Festlegung von Einschubkomponenten gemäß einem Ausführungsbeispiel der Erfindung.

Die Anordnung in Figur 1 umfasst einen Gehäusekäfig 1 sowie mehrere Einschubkomponenten 2, die zur Aufnahme in den Gehäusekäfig 1 geeignet sind. Bei den Einschubkomponenten 2 handelt es sich im Ausführungsbeispiel um Laufwerksmodule eines Personalcomputers. Im Bereich einer ersten Gehäusewand 3, im dargestellten Ausführungsbeispiel der linken Gehäusewand, befinden sich Führungselemente 4, die die Einschubkomponenten 2 in Einschubrichtung führen. Eine zweite Gehäusewand 5, im Ausführungsbeispiel die rechte Gehäusewand des Gehäusekäfigs 1, weist herausklappbare Halteelemente 6 auf, die durch Lager 15 beweglich mit der zweiten Gehäusewand 5 verbunden sind.

Die Lager 15 sind im gezeigten Ausführungsbeispiel als in die Gehäusewand 5 eingestanzte Blechlaschen ausgeführt. Die Halteelemente 6 bestehen aus einer Halteklammer 7 sowie einer Halteschiene 8. Durch Zusammendrücken der Enden der elastischen Halteklammern 7 können diese werkzeugfrei in die Lager 15 eingeführt werden.

In der zweiten Gehäusewand 5 des Gehäusekäfigs 1 sind des Weiteren Befestigungslöcher 9 vorgesehen. Durch Heranschwenken der Halteelemente 6 an die zweite Gehäusewand 5 greifen an den Halteelementen 6 ausgebildete Befestigungszapfen 10 durch die Befestigungslöcher 9 in Befestigungsöffnungen 11 der Einschubkomponenten 2. Dabei kann die Halteklammer 7 in der geschlossenen Position mit Hilfe von Rastnasen 12 in der zweiten Gehäusewand 5 fixiert werden. Die Rastnasen 12 können beispielsweise in den Gehäusekäfig 1 gestanzt oder aus ihm herausgebogen werden.

Durch die Form der Halteklammer 7 wird in dem verrasteten Zustand eine Kraft von der Halteklammer 7 über die Halteschiene 8 auf die Einschubkomponenten 2 ausgeübt. Dazu muss die Halteklammer 7 aus einem elastischen Material, wie beispielsweise aus Federdraht, gefertigt werden. Der Anpressdruck der Halteklammer 7 auf die Einschubkomponente 2 sorgt für einen Toleranzausgleich, sodass eine auf diese Weise festgelegte Einschubkomponente 2 sicher in dem Gehäusekäfig 1 gehalten wird. Durch den Anpressdruck der Halteklammer 7 wird gleichzeitig eine sichere elektrische Verbindung zwischen der Einschubkomponente 2 und dem Gehäusekäfig 1 hergestellt. Des Weiteren werden ungewünschte Schwingungen der Einschubkomponente 2, beispielsweise verursacht durch ein besonders schnelles CD-ROM-Laufwerk, vermieden.

In der in Figur 1 dargestellten vorteilhaften Ausgestaltung sind die Halteschienen 8 aus Kunststoff gefertigt. Dadurch können die Halteschienen 8 besonders preiswert und mit zusätzlichen Prägungen zum Einschnappen in die Halteklammer 7 versehen hergestellt werden. Somit ist eine komplett werkzeugfreie Montage des Gehäusekäfigs 1 sowie der darin einzubauenden Einschubkomponenten 2 möglich.

Wie aus der Figur 1 deutlich wird, eignet sich die Befestigungsmethode für Einschubkomponenten 2 unterschiedlicher Größe gleichermaßen. In dem in Figur 1 dargestellten Gehäusekäfig können beispielsweise zwei 5 1/4''-Laufwerke sowie zwei 3 1/2''-Laufwerke befestigt werden. Selbstverständlich kann die erfindungsgemäße Befestigungsanordnung auch zur Montage einer beliebigen anderen Anzahl von Einschubkomponenten 2 oder auch nur einer einzelnen Einschubkomponente 2 verwendet werden. Dabei sind die Einschubkomponenten 2 nicht auf Laufwerke eines Computers beschränkt, sondern können auch andere Einschubkomponenten 2, wie beispielsweise elektronische Einschubmodule 2 anderer Arten von Gehäuseschränken umfassen.

Der in der Figur 1 dargestellte Gehäusekäfig 1 weist weitere Befestigungslöcher 9 in der ersten Gehäusewand 3 bzw. zweiten Gehäusewand 5 auf, sodass alternativ zur gezeigten Befestigungsmethode mittels schwenkbarer Halteelemente 6 auch eine Festlegung von Einschubkomponenten 2 mittels Schrauben 13 möglich ist. Dadurch wird es beispielsweise möglich, Einschubkomponenten 2, die einen besonders festen Halt benötigen, zusätzlich mit Schrauben 13 an dem Gehäusekäfig 1 zu befestigen. Zugleich kann ein Gehäusekäfig 1 gemäß dem Ausführungsbeispiel auch in unterschiedlichen Varianten ausgeliefert werden, beispielsweise einer preisgünstigeren Version, in der die Halteelemente 6 nicht in dem Gehäusekäfig 1 vorhanden sind und die Einschubkomponenten 2 durch Schrauben 13 festgelegt werden, und einer höherwertigeren Version, in der die Halteelemente 6 in dem Gehäusekäfig 1 vorhanden sind.

In einer besonders komfortablen Ausgestaltung des Gehäusekäfigs 1 sind die Lager 15 oder die Halteklammern 7, mit denen die Halteelemente 6 schwenkbar befestigt sind, zusätzlich mit Rastkerben 14 versehen, sodass ein Halteelement 6 auch im geöffneten Zustand gehalten werden kann. Somit kann verhindert werden, dass das Halteelement 6 ungewollt in die zweite Gehäusewand 5 einschwenkt und so eine leichte Montage bzw. Entnahme einer Einschubkomponente 2 behindert.

### Bezugszeichenliste

- 1: Gehäusekäfig
- 2: Einschubkomponente
- 3: erste Gehäusewand
- 4: Führungselement
- 5: zweite Gehäusewand
- 6: Halteelement
- 7: Halteklammer
- 8: Halteschiene
- 9: Befestigungsloch
- 10: Befestigungszapfen
- 11: Befestigungsöffnung
- 12: Rastnase
- 13: Schraube
- 14: Rastkerbe
- 15: Lager

## Patentansprüche

1. Anordnung zur Festlegung einer Einschubkomponente (2) in einem Gehäusekäfig (1), aufweisend
- einen Gehäusekäfig (1) zur Aufnahme wenigstens einer Einschubkomponente (2) mit seitlichen Befestigungsöffnungen (11),
- wenigstens ein Führungselement (4) im Bereich einer ersten Wand (3) des Gehäusekäfigs (1), durch das die Einschubkomponente (2) in Einschubrichtung geführt wird, und
- wenigstens ein Halteelement (6) im Bereich einer zweiten Wand (5) des Gehäusekäfigs (1), durch das die Einschubkomponente (2) festgelegt wird, wobei
- das Halteelement (6) klapp- oder schwenkbar an der zweiten Wand (5) befestigt ist, in einem geschlossenen Zustand verrastbar ist, und eine elastische Halteklammer (7) aufweist, wobei die Halteklammer (7) so mit der zweiten Wand (5) des Gehäusekäfigs (1) verrastbar ist, dass sie eine Kraft in Richtung der Einschubkomponente (2) ausübt,
**dadurch gekennzeichnet, dass**
- das Halteelement (6) eine Halteschiene (8) mit Befestigungszapfen (10) aufweist, die im geschlossenen Zustand in die Befestigungsöffnungen (11) der Einschubkomponente (2) eingreifen, sodass die Einschubkomponente (2) festgelegt ist, und in einem geöffneten Zustand die Befestigungsöffnungen (11) freigeben, sodass die Einschubkomponente (2) in Einschubrichtung bewegt werden kann, und
- die Halteschiene (8) an der elastischen Halteklammer (7) befestigt ist so daß die Halteschiene die Kraft der elastischen Halteklammer (7) über die Befestigungszapfen (10) auf die Befestigungsöffnungen (11) oder die Einschubkomponente (2) überträgt.

2. Anordnung nach Anspruch 1,
**dadurch gekennzeichnet, dass**
- die zweite Wand (5) des Gehäusekäfigs (1) wenigstens ein erstes Rastelement (12) zum Verrasten des Halteelementes (6) in den geschlossenen Zustand aufweist und
- das erste Rastelement (12) als Rastnase oder Lappen in der zweiten Gehäusewand (5) ausgeführt ist.

3. Anordnung nach einem der Ansprüche 1 bis 2,
**dadurch gekennzeichnet, dass**
- die zweite Wand (5) des Gehäusekäfigs (1) wenigstens ein zweites Rastelement (14) zum Verrasten des Halteelementes (6) in dem geöffneten Zustand aufweist und
- das zweite Rastelement (13) als Rastkerbe in der zweiten Gehäusewand (5) ausgeführt ist.

4. Anordnung nach einem der Ansprüche 1 bis 3,
**dadurch gekennzeichnet, dass**
das Führungselement (4) als aus der ersten Wand (3) des Gehäusekäfigs (1) herausgebogener Blechlappen ausgeführt ist.

5. Anordnung nach einem der Ansprüche 1 bis 4,
**dadurch gekennzeichnet, dass**
- die seitlichen Befestigungsöffnungen (11) Gewinde aufweisen und
- die Einschubkomponente (2) mittels in die Befestigungsöffnungen (11) eingeführte Schrauben (13) an der ersten oder zweiten Gehäusewand (3, 5) befestigbar ist.

6. Anordnung nach einem der Ansprüche 1 bis 5,
**dadurch gekennzeichnet, dass**
es sich bei der Einschubkomponente (2) um ein Disketten-, CD-ROM-, CD-RW-, DVD-, MO-, Festplatten- oder Speicherkartenlaufwerk handelt.

7. Anordnung nach einem der Ansprüche 1 bis 6,
**dadurch gekennzeichnet, dass**
der Gehäusekäfig (1) zur Aufnahme mehrerer Einschubkomponenten (2) eingerichtet ist.

8. Anordnung nach Anspruch 7,
**dadurch gekennzeichnet, dass**
die Einschubkomponenten (2) unterschiedliche Einbaumaße aufweisen und es sich insbesondere um Einschubkomponenten im 5 1/4"- und 3 1/2"-Formfaktor handelt.

## Claims

1. Arrangement for fixing an insertable component (2) in a housing cage (1), having
- a housing cage (1) for accommodating at least one insertable component (2) having lateral fastening openings (11),
- at least one guide element (4) in the region of a first wall (3) of the housing cage (1), said guide element being used to guide the insertable component (2) in the direction of insertion, and
- at least one retaining element (6) in the region of a second wall (5) of the housing cage (1), said retaining element being used to fix the insertable component (2),
- the retaining element (6) being fastened to the second wall (5) in such a manner that it can be folded or pivoted, being able to be latched in a closed state, and having an elastic retaining clip (7), the retaining clip (7) being able to be latched to the second wall (5) of the housing cage (1) in such a manner that it exerts a force in the direction of the insertable component (2),
**characterized in that**
- the retaining element (6) has a retaining rail (8) having fastening pins (10) which engage in the fastening openings (11) of the insertable component (2) in the closed state, with the result that the insertable component (2) is fixed, and free the fastening openings (11) in an open state, with the result that the insertable component (2) can be moved in the direction of insertion, and
- the retaining rail (8) is fastened to the elastic retaining clip (7) such that the retaining rail transmits the force of the elastic retaining clip (7) to the fastening openings (11) or the insertable component (2) via the fastening pins (10) .

2. Arrangement according to. Claim 1,
**characterized in that**
- the second wall (5) of the housing cage (1) has at least one first latching element (12) for latching the retaining element (6) in the closed state, and
- the first latching element (12) is in the form of a latching lug or tab in the second housing wall (5) .

3. Arrangement according to either of Claims 1 and 2,
**characterized in that**
- the second wall (5) of the housing cage (1) has at least one second latching element (14) for latching the retaining element (6) in the open state, and
- the second latching element (13) is in the form of a latching notch in the second housing wall (5).

4. Arrangement according to one of Claims 1 to 3,
**characterized in that**
the guide element (4) is in the form of a sheet-metal tab which is bent out of the first wall (3) of the housing cage (1).

5. Arrangement according to one of Claims 1 to 4,
**characterized in that**
- the lateral fastening openings (11) have threads, and
- the insertable component (2) can be fastened to the first or second housing wall (3, 5) by means of screws (13) which are inserted into the fastening openings (11).

6. Arrangement according to one of Claims 1 to 5,
**characterized in that**
the insertable component (2) is a floppy disk, CD-ROM, CD-RW, DVD, MO, hard disk or memory card drive.

7. Arrangement according to one of Claims 1 to 6,
**characterized in that**
the housing cage (1) is set up to accommodate a plurality of insertable components (2).

8. Arrangement according to Claim 7,
**characterized in that**
the insertable components (2) have different installation dimensions and are, in particular, insertable components with the 5 1/4" and 3 1/2" form factor.

## Revendications

1. Dispositif pour fixer un composant insérable (2) dans une cage de boîtier (1), présentant :
- une cage de boîtier (1) pour recevoir au moins un composant insérable (2) avec des ouvertures de fixation latérales (11),
- au moins un élément de guidage (4) dans la région d'une première paroi (3) de la cage de boîtier (1), par lequel le composant insérable (2) est guidé dans la direction d'insertion, et
- au moins un élément de retenue (6) dans la région d'une deuxième paroi (5) de la cage de boîtier (1), par lequel le composant insérable (2) est fixé,
- l'élément de retenue (6) étant fixé de manière rabattable ou pivotante à la deuxième paroi (5), pouvant être encliqueté dans un état fermé, et présentant une pince de retenue élastique (7), la pince de retenue (7) pouvant être encliquetée avec la deuxième paroi (5) de la cage de boîtier (1) de telle sorte qu'elle exerce une force dans la direction du composant insérable (2),
**caractérisé en ce que**
- l'élément de retenue (6) présente un rail de retenue (8) avec des tourillons de fixation (10), qui, dans l'état fermé, viennent en prise dans les ouvertures de fixation (11) du composant insérable (2), de sorte que le composant insérable (2) soit fixé, et dans un état ouvert, libèrent les ouvertures de fixation (11), de sorte que le composant insérable (2) puisse être déplacé dans la direction d'insertion, et
- le rail de retenue (8) étant fixé à la pince de retenue élastique (7) de telle sorte que le rail de retenue transfère la force de la pince de retenue élastique (7) par le biais des tourillons de fixation (10) aux ouvertures de fixation (11) ou au composant insérable (2).

2. Dispositif selon la revendication 1, **caractérisé en ce que**
- la deuxième paroi (5) de la cage de boîtier (1) présente au moins un premier élément d'encliquetage (12) pour l'encliquetage de l'élément de retenue (6) dans l'état fermé, et
- le premier élément d'encliquetage (12) est réalisé sous forme d'ergot d'encliquetage ou de langue dans la deuxième paroi de boîtier (5).

3. Dispositif selon l'une quelconque des revendications 1 ou 2,
**caractérisé en ce que**
- la deuxième paroi (5) de la cage de boîtier (1) présente au moins un deuxième élément d'encliquetage (14) pour l'encliquetage de l'élément de retenue (6) dans l'état ouvert et
- le deuxième élément d'encliquetage (13) est réalisé sous forme d'entaille d'encliquetage dans la deuxième paroi de boîtier (5).

4. Dispositif selon l'une quelconque des revendications 1 à 3,
**caractérisé en ce que**
l'élément de guidage (4) est réalisé sous forme de langue de tôle cintrée hors de la première paroi (3) de la cage de boîtier (1).

5. Dispositif selon l'une quelconque des revendications 1 à 4,
**caractérisé en ce que**
- les ouvertures de fixation latérales (11) présentent des filetages et
- le composant insérable (2) peut être fixé au moyen de vis (13) introduites dans les ouvertures de fixation (11) à la première ou à la deuxième paroi de boîtier (3, 5).

6. Dispositif selon l'une quelconque des revendications 1 à 5,
**caractérisé en ce que**
le composant insérable (2) est un lecteur de disquette, de CD-ROM, de CD-RW, de DVD, de MO, de disque dur ou de carte mémoire.

7. Dispositif selon l'une quelconque des revendications 1 à 6,
**caractérisé en ce que**
la cage de boîtier (1) est prévue pour recevoir plusieurs composants insérables (2).

8. Dispositif selon la revendication 7,
**caractérisé en ce que**
les composants insérables (2) présentent différentes dimensions d'installation et il s'agit notamment de composants insérables dans un facteur de forme de 5 1/4" et de 3 1/2".
